(19) Europäisches Patentamt
European Patent Office
Office européen des brevets

(11) **EP 1 914 733 B1**

(12) **EUROPEAN PATENT SPECIFICATION**

(45) Date of publication and mention
of the grant of the patent:
**16.06.2010 Bulletin 2010/24**

(51) Int Cl.:
***G11B 7/0065*** *(2006.01)*

(21) Application number: **06122497.8**

(22) Date of filing: **18.10.2006**

(54) **Method for demodulation of data pages in a holographic storage system**

Verfahren zur Demodulation von Datenseiten in einem holographischen Speichersystem

Procédé de démodulation de pages de données dans un système de stockage holographique

(84) Designated Contracting States:
**DE FR GB**

(43) Date of publication of application:
**23.04.2008 Bulletin 2008/17**

(73) Proprietor: **Thomson Holding Germany GmbH & Co. OHG**
**30625 Hannover (DE)**

(72) Inventor: **Malki, Oliver**
**78052 VS-Pfaffenweiler (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(56) References cited:
**EP-A- 1 610 309      EP-A- 1 610 324**
**EP-A- 1 703 501      WO-A-2005/098830**
**US-A1- 2003 174 608      US-A1- 2005 286 387**
**US-A1- 2006 215 527      US-B1- 7 116 626**

**Description**

The present invention relates to a method for demodulation of a data page in a holographic storage system, and to a holographic storage system using such method.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array.

One of the main difficulties during the reading process in a holographic storage system arises from the fact that a 2-dimensional detector delivers 2-dimensional data to be demodulated. In conventional 1-dimensional data arrangements like DVD the time base may vary and is, therefore, periodically controlled by a sync detection. In contrast, in holographic storage systems the sampling can additionally vary in two spatial directions due to any kind of image distortion or misalignment. In the initial stages of holographic data storage this problem was solved by using very advanced optics, with high quality, large size and very expensive and heavy lens systems. Though this allows to reduce the optical misalignment, distortion, etc., to a minimum, it seems to be mainly practicable for a laboratory demonstration system.

Another solution is the usage of a small code rate and a large oversampling factor between the detector and SLM, e.g. 3 by 3, where 3x3 pixels of the detector are associated to one pixel of the SLM. See, for example, G. W. Burr et al.: "Coding tradeoffs for high density holographic data storage", Proc. SPIE, Vol. 3802 (1999), pp.18-29. This enables to have a simple slicing mechanism. The n highest members in a ranking of grey values in each single code block are selected to determine the n 'ON' bits in a code word. In other words, as the number n of 'ON' bits is fixed by the coding scheme, only the n brightest pixels of a code block are treated as 'ON' bits. Due to the oversampling an SLM pixel is imaged onto a plurality of detector pixels. Therefore, the initial value of the SLM pixel can only be estimated. This estimated value is entered in a ranking list. In this ranking list the first n pixels are treated as 'ON', the remaining pixels are treated as 'OFF'. The demodulation step is then realized by identifying the code word in a table of allowed code words. A drawback of this method is the resulting low data capacity per data page.

A further solution is the calculation of the optical transfer function, including displacement, rotation, magnification, distortion, etc., in order to determine a fixed set of coefficients. See, for example, M. R. Ayres et al.: "Image Oversampling for Holographic Data Storage", ODIS conference 2005. This set of coefficients is used to calculate the 'true' value of each data pixel from the neighborhood of this pixel. This method has the drawback that it does not allow to consider deviations in the optical transfer function by external factors or between different systems.

US-B-116626, which is used for the two-part form delimitation, discloses a holographic storage system including micro-actuators to control the positioning of at least one of an SLM, a detector or a storage medium. The positioning is based on feedback associated with a misalignment of a detected image. The respective component is incrementally moved and a channel metrics is calculated. As channel metrics an average intensity value per page, an SNR per page, a bit error rate (BER) per page, a number of iterations for a decoding process or equalizer filter coefficients used as alignment feedback to the detector or SLM are proposed.

US2005/0286387 discloses a method for equalizing a holographic storage system image page and for compensating nonlinearity of a holographic data storage channel. A local alignment error vector is generated for each region of the image page. Special data pages are used to determine the coefficients of a global pixel spread function and are used in the calibration function.

It is an object of the invention to propose an alternative method for the demodulation of data pages in holographic storage systems.

According to the invention, this object is achieved by a method for demodulating a holographic data page, having the steps of:

- performing an adaptive learning process for adapting a demodulation mechanism, and
- demodulating the data page with the adapted demodulation mechanism.

The invention replaces a completely fixed and likely unstable demodulation mechanism by a demodulation where parts of the transformations are obtained by an automatic and adaptive learning mechanism. The learning/adapting mechanism preferably covers the complete path of modulation of data, noisy channel and demodulation.

The solution according to the invention has a plurality of advantages. The code rate can be increased and the oversampling can be reduced. This leads to a higher number of data bits per data page. Given a detector with a maximum frame rate this increases the data rate. Furthermore, the optical transfer function is determined individually for each combination of holographic storage medium and holographic storage system. This is done for different external conditions, e.g. temperature deviations, mechanical, optical or electronic deviations and tolerances etc. As a result a higher interchangeability and a higher robustness are obtained. Because of the reduced requirements of stability and tolerances of the optical, electronic and mechanical part of the holographic data storage system, a reduction in size and cost of the entire system is achieved. The adaptation is done automatically and does not need a manual adaptation during the manufacturing process.

Advantageously, training data with known code words is used for the adaptive learning process. A well defined and specifically designed training set of code words is provided, e.g. at the start sectors of the holographic storage medium or at any other specific position of the holographic storage medium, e.g. the beginning. At the beginning of the reading process, i.e. after the alignment of the detector relative to the data page via two-dimensional syncs, this known set of code words is correlated with the data acquired by a detector from the holographic storage medium. The set of known code words at the beginning of each medium or at the beginning of one or more sectors only consumes a small fraction of the entire data capacity.

Preferably, the correlation is achieved by calculating the principal axis transformation (PAT) of the training data and performing a principal component analysis (PCA). For demodulating the data page a principal component analysis and a K-nearest-neighbors (KNN) classification of the code blocks of the data page is advantageously performed.

The adaptation process is based on a multivariate data analysis procedure via the analysis of variance (often called principle component analysis), which transforms the training data into a space of maximum variance (principal axis transformation). The analysis of variance is done directly on the detector values, before any slicing step.

This adaptation process avoids the determination of a complex mathematical model of the optical/electronic/mechanical system, i.e. the noisy channel. It corresponds to measuring the transfer function of the system at the beginning of the reading process. The demodulation step is then performed via PCA and a classification algorithm, e.g. a nearest neighbor classification (KNN) working directly on the detector values of each code block, which are transformed into the principle component space. The distance measure, which is needed for a classification algorithm, is based on a distance measure in the principle component space. This increases the robustness and decreases the influence of any noise.

PCA is a robust method for determining properties out of high-dimensional input spaces. Using 4 by 4 code blocks, which corresponds to a code word of length=16, leads to a 16-dimensional input space, i.e. an input vector of 16 gray values. The relation of this input vector to one output value such as a number between 0 and 256 is determined by the PCA classification. Using only the principle component space for classification allows to reduce the speed and memory requirements for the numerical calculation units.

Though the invention has been described with reference to holographic data storage, the invention can be applied to any data storage system where high-dimensional input vectors, e.g. from a two-dimensional detector, have to be decoded. The automatic and adaptive learning mechanism is useful whenever it is not possible or the necessary effort is too large to determine an exact mathematical model of the noisy channel, or whenever the noisy channel varies in an unpredictable way. By using the analysis of variances not only the relation itself but also the robustness or stability of the model can be determined.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1    schematically depicts a coaxial holographic storage system,

Fig. 2    depicts the general method according to the invention for data processing in a holographic storage system,

Fig. 3    shows the first step of the method according to the invention in more detail,

Fig. 4    illustrates a 2-dimensional code word or code block,

Fig. 5    shows an exemplary arrangement of code blocks and sync blocks in a data page,

Fig. 6    illustrates the 2-dimensional classification space given by the two largest principle components,

Fig. 7    shows the second step of the method according to the invention in more detail, and

Fig. 8     illustrates the transformation of a vector of detector values of an unknown code word into the classification space via the principle axis transformation.

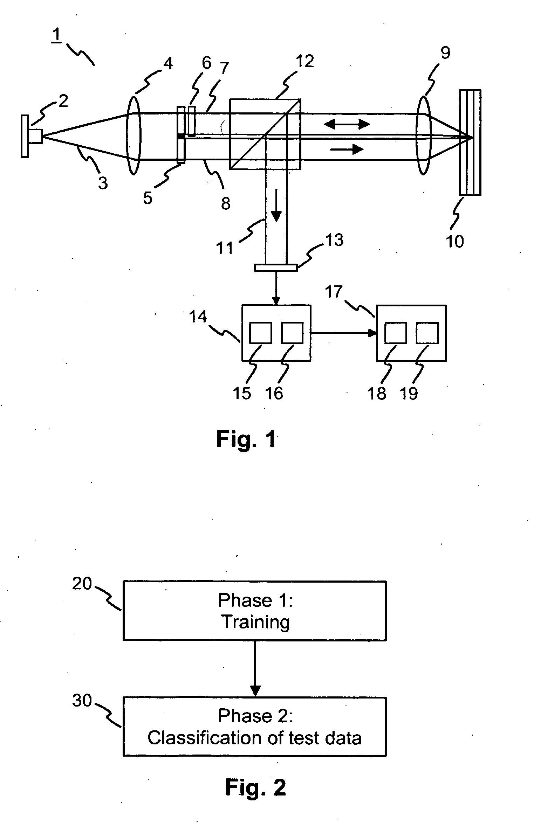

In holographic data storage digital data are stored by recording the interference pattern produced by the superposition of two coherent laser beams. An exemplary setup of a holographic pickup 1 for use in a holographic storage system is shown in Fig. 1. A source of coherent light, e.g. a laser diode 2, emits a light beam 3, which is collimated by a collimating lens 4. The light beam 3 is then divided into two separate light beams 7, 8. In the example the division of the light beam 3 is achieved using a first beam splitter 5. However, it is likewise possible to use other optical components for this purpose. A spatial light modulator (SLM) 6 modulates one of the two beams, the so called "object beam" 7, to imprint a 2-dimensional data pattern. Both the object beam 7 and the further beam, the so called "reference beam" 8, are focused into a holographic storage medium 10, e.g. a holographic disk or card, by an objective lens 9. At the intersection of the object beam 7 and the reference beam 8 an interference pattern appears, which is recorded in a photosensitive layer of the holographic storage medium 10.

The stored data are retrieved from the holographic storage medium 10 by illuminating a recorded hologram with the reference beam 8 only. The reference beam 8 is diffracted by the hologram structure and produces a copy of the original object beam 7, the reconstructed object beam 11. This reconstructed object beam 11 is collimated by the objective lens 9 and directed onto a 2-dimensional array detector 13, e.g. a CCD-array, by a second beam splitter 12. The array detector 13 allows to reconstruct the recorded data. Connected to the array detector 13 is a learning mechanism 14, which includes a principal axis transformator 15 and a principal component analyzer 16. Furthermore, a demodulation mechanism 17 is connected to the learning mechanism 14. The demodulation mechanism 17 includes a principal component analyzer 18 and a K nearest-neighbors (KNN) classifier 19. Of course, the learning mechanism 14 and the demodulation mechanism 17 may as well be combined in a single circuit, or at least share some elements.

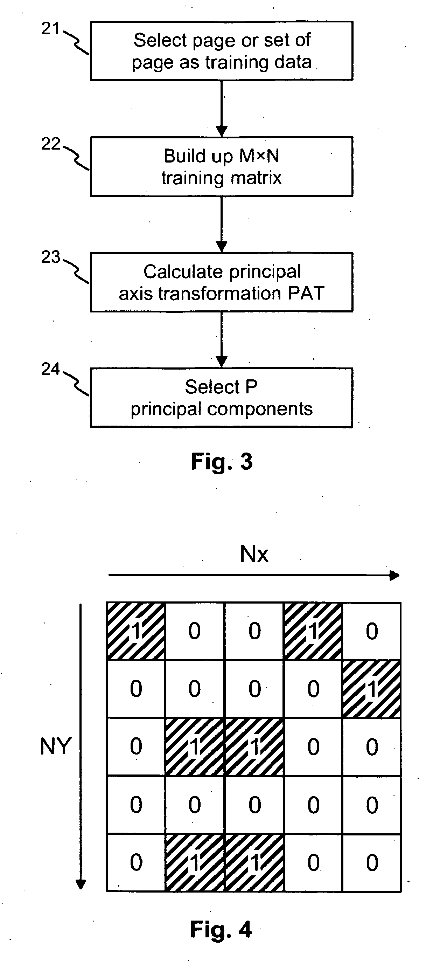

Fig. 2 depicts the general method according to the invention for data processing in a holographic storage system. In a first phase 20 training sets are used to determine a transformation. In a second phase 30 this transformation is applied to the test data. A classification is then done in the principal component space. A detailed explanation of both phases 20, 30 shall now be given with reference to Figs. 3 to 9.

In the first phase 20 the principal axis transformation (PAT) of the covariance matrix of a training data matrix read from the holographic storage medium 10 is calculated. The principal steps of the first phase 20 are shown in Fig. 3. First a data page or a data set of a data page is selected 21 as training data. To achieve an optimum quality of the transformation the sets of training data preferably include all or at least most possible detector values. In the present case this means that a representative selection or even all code words are placed in different locations of the data page. From the selected training data a MxN training data matrix is built up 22 by reading out the detector values of the known training sets of code words. The MxN training data matrix consists of a number of M training vectors of N elements each. The number N is given by the number of code symbols per code word. An exemplary 2D code word (also designated as code block) is shown in Fig. 4. Optionally, this number is multiplied by the oversampling factor f=fy*fx, where fx and fy are the oversampling factors in x- and y-direction, respectively. Using directly the detector data as an input vector has the advantage that it is not necessary to calculate downsampled data. Typical values for the code word length are Ny*Nx=25 with Nx=5, Ny=5 and an oversampling factor of f=4. This leads to N=100.

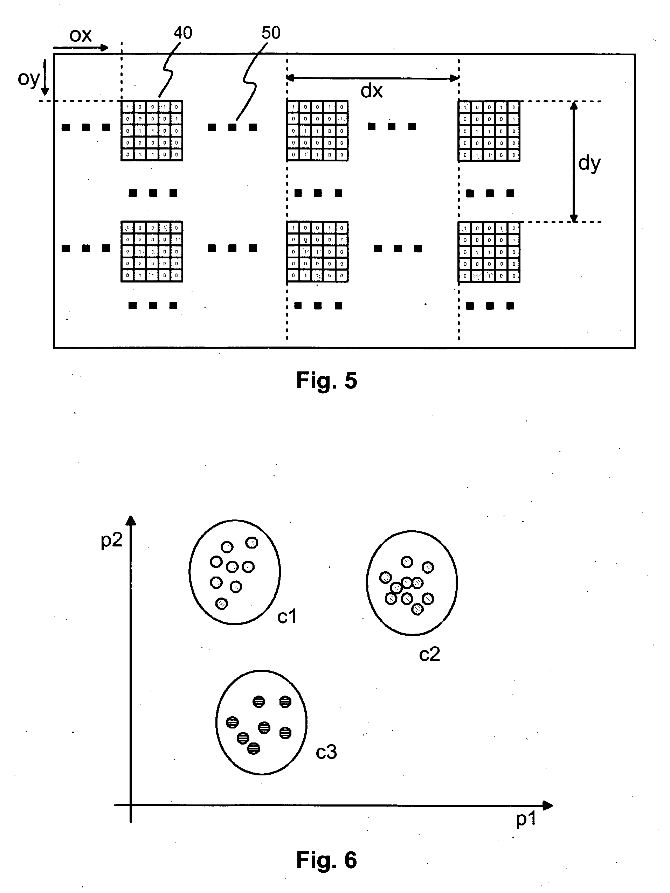

The number of training code words depends on the number of different code words in the code, e.g. 256 for a 8 to 16 modulation. It also depends on the number of training sets needed for each code word, which is approximately in the range of 10-100. Different training sets may be build up for different block positions on the data page. In Fig. 5 an exemplary arrangement of code blocks 50 and syncs blocks 40 in a data page is illustrated. The code blocks 50 are indicated by the black dots and generally differ noticeably from the sync blocks 40. The arrangement is characterized by the origin (ox, oy) of one of the code blocks (here the upper left code block), and the distance between adjacent code blocks, which is defined by dx and dy. All values are given in pixels of the data page.

After building up 22 the training data matrix the principal axis transformation of this training data matrix is calculated 23. The largest principal components, e.g. the principal components 1 to 4, are used 24 to span a classification space. The principal components are built by the square root of the eigenvalues of the covariance matrix C of the training data matrix. All training data A are transformed via the matrix V of the eigenvectors (ordered by size of the eigenvalues) of the covariance matrix C as

$$T = A \cdot V,$$

where V is the eigenvector matrix of C, C being the covariance matrix of A.

The principal axis transformation is a standard procedure in linear algebra. Consider a 2-dimensional case. The PAT transforms the measured values from a coordinate system X1, X2 into a new coordinate system X1', X2', in which the coordinate axes coincide with the directions of the principal axes. Mathematically these are the directions of largest variance. The new coordinate system allows to describe the measurement more efficiently. In practice it often occurs that one axis is substantially smaller than the other axis. In higher dimensional systems it is typical that only a few axes are substantially larger than the remaining axes. By limiting the modeling of the system to the largest axes some information is lost, but the modeling gets less susceptible to noise, i.e. it gets more stable.

In T only the columns corresponding to the selected number of largest principal components are used to define classes in the principal component space. An example of 2 principal components p1, p2 and 3 classes c1, c2, c3 is shown in Fig. 6. Each class corresponds to a set of training data of a different code word. Hence the number of required classes is given by the number of different code words in the block code. The high-dimensional input space is transformed into a space of maximum variance. In this new space only the components with the highest variances are regarded, e.g. only the 2 principal components from an originally 100-dimensional input space. This reduction to only a few but significant dimensions leads to a model, which is more stable and less dependent on noise. The average distance between classes in comparison to their diameter delivers a quality criterion of the combination of the holographic storage medium and the holographic storage system.

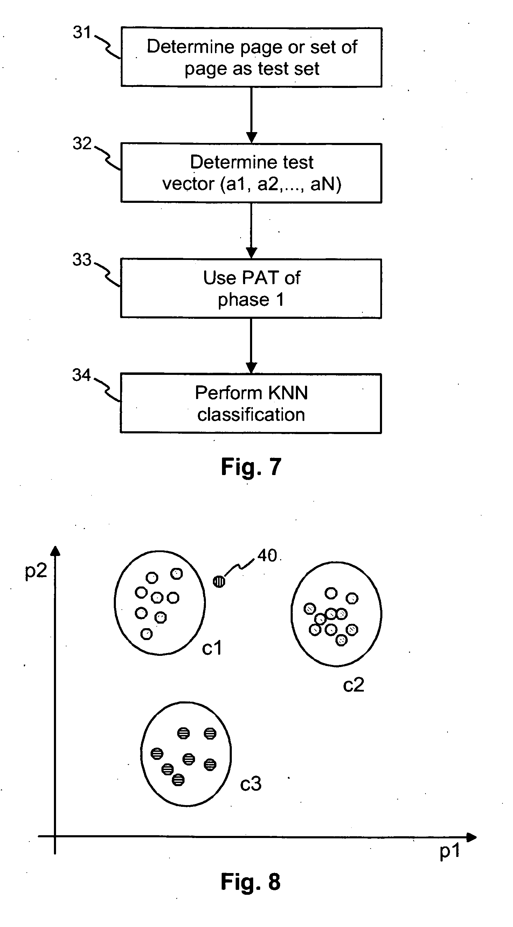

In Fig. 7 the second phase 30 of the method according to the invention is illustrated in more detail. First a data page or a data set of a data page is determined 31 as a test data set. From the test data set the test data is derived 32. The test data is a vector of detector values of an unknown code block. The matrix of the eigenvectors V is then used to transform 33 the test data via principal axis transformation into the classification space, as shown in Fig. 8. Via a majority vote 34 of the K nearest neighbors (also-called KNN classification) the unknown code block 40 is identified with a single class. As this class corresponds to a specific code word, with the KNN classification the demodulation step is performed.

The set of training code words is fix and needs to be known to the adaptive demodulation system. The training set preferably includes all or at least a representative selection of all possible code words. The training sets are advantageously repeated on different data pages and in different locations within a data page. The training data is always analyzed at the beginning of the reading process and depends on the current transfer function. This means that variations of the transfer function due to any mechanical, optical or electronic variations in the holographic data storage system have an influence on the training data. Therefore, the principal axis transformation of the training data reflects the current situation of the holographic data storage system. This leads to an automatic adaptation of the principal axis transformation to the transfer function. As the principal axis transformation is used for the classification, this results in an automatic adaptation of the demodulation step.

**Claims**

1.    Method for demodulating a holographic data page, having the steps of:

    - performing an adaptive learning process (20) for adapting a demodulation mechanism (17) using training data with known code words (21, 22), wherein the training data are correlated with data acquired by a detector (13) from a holographic storage medium (10), and
    - demodulating (30) the holographic data page with the adapted demodulation mechanism,

    **characterized in that** the correlation step includes calculating (23) the principal axis transformation (PAT) of the training data and performing (24) a principal component analysis (PCA).

2.    Method according to claim 1, having the step of:

    searching for the training data at the beginning of a holographic storage medium (10) or at the beginning of one or more sectors of a holographic storage medium (10).

3.    Method according to claim 1, having the step of:

    performing a principal component analysis (PCA) and a K-nearest-neighboxs (KNN) classification of the code blocks of the holographic data page.

4.    Apparatus for reading from a holographic storage medium (10), having

    - a demodulation mechanism (17) for demodulating (30) a data page retrieved from the holographic storage medium (10), and
    - a learning mechanism (14) for adapting (20) the demodulation mechanism, wherein the learning mechanism (14) has a correlator for correlating training data having known code words (21, 22) with data acquired by a detector (13) from the holographic storage medium (10),

    **characterized in that** the correlator has a principal axis transformator (15) and a principal component analyzer (16).

5.    Apparatus according to claim 4, wherein the demodulation mechanism (17) has a principal component analyzer (18) for analyzing the code blocks of the data page, and a K-nearest-neighbors (KNN) classifier (19) for classifying the code blocks of the data page.

## Patentansprüche

1. Verfahren zum Demodulieren einer holographischen Datenseite, wobei das Verfahren die folgenden Schritte umfasst:

   - Ausführen eines adaptiven Lernprozesses (20) zum Anpassen eines Demodulationsmechanismus (17) unter Verwendung von Trainingsdaten mit bekannten Codewörtern (21, 22), wobei die Trainingsdaten mit Daten korreliert werden, die durch einen Detektor (13) von einem holographischen Speichermedium (10) erfasst werden, und
   - Demodulieren (30) der holographischen Datenseite mit dem angepassten Demodulationsmechanismus,

   **dadurch gekennzeichnet, dass** der Korrelationsschritt das Berechnen (23) der Hauptachsentransformation (PAT) der Trainingsdaten und das Ausführen (24) einer Hauptkomponentenanalyse (PCA) enthält.

2. Verfahren nach Anspruch 1, das den folgenden Schritt umfasst:

   Suchen nach den Trainingsdaten beim Beginn eines holographischen Speichermediums (10) oder beim Beginn eines oder mehrerer Sektoren eines holographischen Speichermediums (10).

3. Verfahren nach Anspruch 1, wobei das Verfahren den folgenden Schritt umfasst:

   Ausführen einer Hauptkomponentenanalyse (PCA) und einer K-nächste-Nachbarn-Klassifizierung (KNN-Klassifizierung) der Codeblöcke der holographischen Datenseite.

4. Vorrichtung zum Lesen von einem holographischen Speichermedium (10), wobei die Vorrichtung aufweist:

   - einen Demodulationsmechanismus (17) zum Demodulieren (30) einer von dem holographischen Speichermedium (10) wiedergewonnenen Datenseite, und
   - einen Lernmechanismus (14) zum Anpassen (20) des Demodulationsmechanismus, wobei der Lernmechanismus (14) einen Korrelator aufweist, um Trainingsdaten, die bekannte Codewörter (21, 22) aufweisen, mit Daten zu korrelieren, die durch einen Detektor (13) von dem holographischen Speichermedium (10) erfasst werden,

   **dadurch gekennzeichnet, dass** der Korrelator eine Hauptachsentransformationseinrichtung (15) und eine Hauptkomponentenanalyseeinrichtung (16) aufweist.

5. Vorrichtung nach Anspruch 4, bei der der Demodulationsmechanismus (17) eine Hauptkomponentenanalyseeinrichtung (18) zum Analysieren der Codeblöcke der Datenseite und einen K-nächste-Nachbarn-Klassifizierer (KNN-Klassifizierer) (19) zum Klassifizieren der Codeblöcke der Datenseite aufweist.

## Revendications

1. Procédé de démodulation d'une page de données holographiques, possédant les étapes consistant à :

   - exécuter un processus d'apprentissage adaptatif (20) pour adapter un mécanisme de démodulation (17) à l'aide de données d'apprentissage comportant des mots de code connus (21, 22), où les données d'apprentissage sont corrélées avec des données acquises par un détecteur (13) à partir d'un support de stockage holographique (10), et
   - démoduler (30) la page de données holographiques avec le mécanisme de démodulation adapté,

   **caractérisé en ce que** l'étape de corrélation inclut un calcul (23) de la transformation de l'axe principal (PAT) des données d'apprentissage et une exécution (24) d'une analyse du composant principal (PCA).

2. Procédé selon la revendication 1, possédant l'étape consistant à :

   rechercher les données d'apprentissage au début d'un support de stockage holographique (10) ou au début d'un ou de plusieurs secteurs d'un support de stockage holographique (10).

3. Procédé selon la revendication 1, possédant l'étape consistant à :

   exécuter une analyse du composant principal (PCA) et une classification des K plus proches voisins (KNN) des blocs de code de la page de données holographiques.

4. Appareil de lecture d'un support de stockage holographique (10) possédant

- un mécanisme de démodulation (17) pour démoduler (30) une page de données récupérée du support de stockage holographique (10), et
- un mécanisme d'apprentissage (14) pour adapter (20) le mécanisme de démodulation, où le mécanisme d'apprentissage (14) possède un corrélateur pour corréler des données d'apprentissage comportant des mots de code connus (21, 22) avec des données acquises par un détecteur (13) à partir du support de stockage holographique (10),

**caractérisé en ce que** le corrélateur possède un transformateur (15) le l'axe principal et un analyseur (16) du composant principal.

5. Appareil selon la revendication 4, où le mécanisme de démodulation (17) possède un analyseur (18) du composant principal pour analyser les blocs de code de la page de données, et un classifieur (19) des K plus proches voisins (KNN) pour classifier les blocs de code de la page de données.

**Fig. 1**

**Fig. 2**

21 — Select page or set of page as training data

22 — Build up M×N training matrix

23 — Calculate principal axis transformation PAT

24 — Select P principal components

**Fig. 3**

Nx

NY

| 1 | 0 | 0 | 1 | 0 |
|---|---|---|---|---|
| 0 | 0 | 0 | 0 | 1 |
| 0 | 1 | 1 | 0 | 0 |
| 0 | 0 | 0 | 0 | 0 |
| 0 | 1 | 1 | 0 | 0 |

**Fig. 4**

**Fig. 5**

**Fig. 6**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US B116626 A

- US 20050286387 A

**Non-patent literature cited in the description**

- **G. W. BURR et al.** Coding tradeoffs for high density holographic data storage. *Proc. SPIE,* 1999, vol. 3802, 18-29